# EUROPÄISCHE PATENTSCHRIFT

(11) **EP 2 617 115 B1**
(45) Veröffentlichungstag und Bekanntmachung des Hinweises auf die Patenterteilung: **05.08.2015**
(21) Anmeldenummer: 11757175.2
(22) Anmeldetag: 09.09.2011
(51) Int. Cl.: H02J 7/00

(54) **VERFAHREN ZUM LADEN EINER BATTERIE EINES KRAFTWAGENS**
METHOD FOR CHARGING A BATTERY OF A MOTOR VEHICLE
PROCÉDÉ DE CHARGE D'UNE BATTERIE DE VÉHICULE À MOTEUR

(30) Priorität: 15.09.2010 DE 102010045515
(43) Veröffentlichungstag der Anmeldung: 24.07.2013
(73) Patentinhaber: Audi AG, 85045 Ingolstadt (DE)
(72) Erfinder: HOFMANN, Reinhard, 85110 Kipfenberg (DE)
(74) Vertreter: Herbst, Matthias Heinz
(86) Internationale Anmeldenummer: PCT/EP2011/004543
(87) Internationale Veröffentlichungsnummer: WO 2012/034670

(56) Entgegenhaltungen:
- EP-A2- 0 938 180
- EP-A2- 2 043 221
- WO-A1-2008/137764
- US-A- 5 629 601
- US-A1- 2008 303 485

## Beschreibung

Die Erfindung betrifft ein Verfahren zum Laden einer Batterie eines Kraftwagens, welche eine Mehrzahl elektrochemischer Zellen umfasst.

Aufgrund von Herstellungstoleranzen und dergleichen unterscheiden sich bei derartigen Batterien die einzelnen elektrochemischen Zellen oftmals geringfügig in ihren Eigenschaften. Die Zellen laden und entladen sich daher bei gleicher Beanspruchung in unterschiedlichem Ausmaß. Es ist daher notwendig, nach Ladevorgängen eine sogenannte Balancierung durchzuführen. Hierbei werden die Ladezustände der einzelnen elektrochemischen Zellen mit jeweiligen Soll-Ladezuständen verglichen. Überschreitet die Ladung einer Zelle den Soll-Ladezustand, so wird sie wieder teilweise entladen, bis ihr Ladezustand dem Sollwert entspricht. Umgekehrt werden Zellen, deren Ladung unterhalb des Soll-Ladezustandes liegt, weiter aufgeladen, bis auch sie den Soll-Ladezustand erreichen. Idealerweise wird die in zu stark geladenen Zellen gespeicherte elektrische Energie genutzt, um nicht hinreichend geladene Zellen weiter aufzuladen. Ein Nachteil der bekannten Balancierungsverfahren liegt darin, dass sie erst nach dem vollständigen Laden der einzelnen Zellen stattfinden. Hierdurch kann es zur Überladung einzelner Zellen kommen, was deren Lebensdauer verringert. Gleichzeitig verlängert die Balancierung den Ladevorgang.

Aus der US 2010/0109610 A1 ist ein Verfahren bekannt, bei welchem eine Balancierung der einzelnen Zeiten bereits während des Ladeprozesses stattfindet. Hierbei wechseln sich Ladephasen, Balancierungsphasen und ladungsfreie Messphasen ab. Damit kann vermieden werden, dass einzelne Zellen überladen werden. Durch die häufigen Wechsel zwischen den einzelnen Phasen des Ladeprozesses wird der Ladeprozess jedoch auch dann verlängert.

Aus der WO 2008/137764 A1 ist ein Verfahren zum Laden einer Batterie bekannt, bei welchem die Zellen der Batterie bei jedem Ladevorgang in einer ersten Ladephase bis zu einem vorgegebenen Ladezustand geladen. In einer zweiten Ladephase wird mit verringertem Ladestrom weitergeladen, bis ein Schwellenwert für den Ladezustand überschritten wird.

Die EP 0 938 180 A2 offenbart ein weiteres Verfahren zum Laden einer Batterie, bei welchem die Zellen während des Ladevorgangs konstant überwacht werden und in Abhängigkeit von dieser Überwachung die Ladeparameter ständig in Echtzeit angepasst werden.

Der vorliegenden Erfindung liegt somit die Aufgabe zugrunde, ein Verfahren der eingangs genannten Art bereitzustellen, welches ein besonders schnelles Laden von elektrochemischen Zellen einer Batterie eines Kraftwagens mit gleichzeitiger Ladungsbalancierung ermöglicht.

Diese Aufgabe wird durch ein Verfahren mit den Merkmalen des Patentanspruchs 1 gelöst.

Bei einem erfindungsgemäßen Verfahren werden beim erstmaligen Laden einer Batterie alle elektrochemischen Zellen der Batterie mit einem vorgegebenen Ladestrom für eine vorgegebene Ladezeit geladen. Anschließend wird ein Ladezustand jeder elektrochemischen Zelle bestimmt und für jede Zelle eine Abweichung von einem Soll-Ladezustand gespeichert. Danach findet ein Balancieren der Zellen statt. Aus den gespeicherten Abweichungen für die jeweiligen Ladezustände der einzelnen Zellen wird bei späteren Ladevorgängen eine Anpassung des Ladestroms und/oder der Ladezeit für jede elektrochemische Zelle vorgenommen. Durch diese Anpassung wird garantiert, dass bei späteren Ladevorgängen alle Zellen bereits nach dem Laden ihrem Soll-Ladezustand möglichst nahe sind, so dass keine Balancierung mehr notwendig ist. Das Verfahren ermöglicht daher ein besonders schnelles und effizientes Laden einer Batterie, ohne dass die Gefahr der Überladung einzelner Zellen besteht. Häufig muss nur noch beim ersten Ladevorgang eine Balancierung durchgeführt werden.

Da sich die notwendigen Ladeströme bzw. Ladezeiten für einzelne Zellen mit deren Alter ändern können, kann es zweckmäßig sein, auch nach jedem späteren Ladevorgang den Ladezustand jeder elektrochemischen Zelle zu bestimmen und jeweils wieder für jede Zelle eine Abweichung von einem Soll-Ladezustand zu speichern. Überschreiten diese Abweichungen vorgegebene Grenzwerte, so wird auch nach dem späteren Ladevorgang eine Balancierung durchgeführt. Damit kann sichergestellt werden, dass auch alternde Batterien nach jedem Ladevorgang ihren optimalen Ladezustand erreicht haben.

Bei einer besonders bevorzugten Ausführungsform der Erfindung wird auf Grundlage der so bestimmten Abweichungen bei späteren Ladevorgängen wieder eine Anpassung des Ladestroms und/oder der Ladezeit für zukünftige Ladevorgänge durchgeführt. Die Ladeparameter der Batterie werden somit ständig iterativ verfeinert, so dass auf Balancierungsvorgänge weitestgehend verzichtet werden kann und immer ein optimaler Ladezustand gewährleistet ist.

Vorzugsweise wird der Ladestrom und/oder die Ladezeit für eine elektrochemische Zelle, deren Ladezustand nach einem Ladevorgang den Soll-Ladezustand überschreitet, beim nächsten Ladevorgang um einen vorgegebenen Wert verringert. Unterschreitet der Ladezustand einer elektrochemischen Zelle dagegen nach einem Ladevorgang den Soll-Ladezustand, so wird der Ladestrom und/oder die Ladezeit für diese elektrochemische Zelle beim nächsten Ladevorgang um einen vorgegebenen Wert erhöht. Dies ermöglicht eine besonders einfache Anpassung der Ladeströme bzw. der Ladezeiten der einzelnen Zellen an ihr Ladeverhalten.

Bei einer besonders bevorzugten Ausführungsform wird der vorgegebene Wert zum Erhöhen bzw. Verringern des Ladestroms und/oder der Ladezeit in Abhängigkeit eines Ausmaßes der Abweichung des Ladezustands der jeweiligen Zelle von dem Soll-Ladezustand gewählt. Hierdurch kann vermieden werden, dass durch die Anpassung beim nächsten Ladevorgang eine Abweichung vom Soll-Ladezustand in der umgekehrten Richtung verursacht wird. Es ist dabei besonders zweckmäßig, den vorgegebenen Wert proportional zum Ausmaß der Abweichung vom Soll-Ladezustand zu wählen. Je näher eine elektrochemische Zelle der Batterie nach einem Ladevorgang also an ihrem Soll-Ladezustand liegt, desto geringer ist die Korrektur, die beim nächsten Ladevorgang an dem Ladestrom bzw. der Ladezeit für diese elektrochemische Zelle vorgenommen wird. Selbstverständlich ist es möglich, nahezu beliebige zweckmäßige Funktionen zu wählen, die einen Zusammenhang zwischen dem Ausmaß der Abweichung vom Soll-Ladezustand und der daraus resultierenden Korrektur vorgeben.

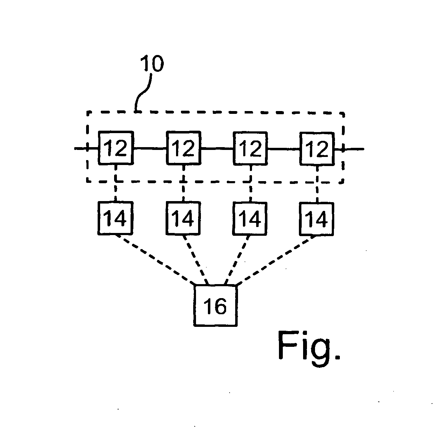

Im Folgenden wird die Erfindung und ihre Ausführungsformen anhand der Zeichnung näher erläutert. Die einzige Figur zeigt hierbei eine schematische Darstellung einer Batterie eines Kraftwagens zur Durchführung eines Ausführungsbeispietsdes erfindungsgemäßen Verfahrens.

Eine im Ganzen mit 10 bezeichnete Batterie für einen elektrisch angetriebenen Kraftwagen umfasst mehrere elektrochemische Zellen 12, die im gezeigten Beispiel in einer Reihenschaltung miteinander verbunden sind. Jeder Zelle 12 ist eine Überwachungs- und Steuereinheit 14 zugeordnet, mittels welcher Betriebsparameter der elektrochemischen Zelle 12, wie beispielsweise deren Klemmenspannung, Temperatur oder dergleichen überprüft werden können. Beim Aufladen der Batterie kann mittels der Überwachungs- und Steuereinheiten 14 zudem für jede elektrochemische Zelle ein spezifischer Ladestrom bzw. eine spezifische Ladezeit eingestellt werden. Die Überwachungs- und Steuereinheiten 14 kommunizieren mit einer Batteriesteuereinheit 16, die für die Überwachung und Steuerung aller Betriebsparameter der Batterie 10 zuständig ist.

Aufgrund von Herstellungstoleranzen und Alterungseffekten unterscheiden sich die einzelnen chemischen Zellen 12 der Batterie 10 in ihrer elektrischen Speicherkapazität. Werden beim Aufladen der Batterie 10 alle elektrochemischen Zellen 12 unter den gleichen Bedingungen, beispielsweise also mit gleichen Ladeströmen und Ladezeiten, aufgeladen, so kommt es aufgrund der Unterschiede der zwischen den elektrochemischen Zellen 12 zu unterschiedlichen Ladezuständen in den einzelnen Zellen 12. Dies ist unerwünscht, da sich hieraus beispielsweise ungleichmäßige Belastungen über die einzelnen elektrochemischen Zellen 12 der Batterie 10 ergeben. Einzelne Zellen 12 können dabei beispielsweise schneller altern, so dass die Lebensdauer der Batterie 10 insgesamt sinkt.

Aus diesem Grund wird nach dem Laden der Batterie 10 üblicherweise ein sogenanntes Balancieren der elektrochemischen Zellen 12 durchgeführt. Hierbei werden die Ladezustände der einzelnen Zellen 12 mit jeweiligen Sollwerten verglichen. Sind einzelne elektrochemische Zellen 12 stärker geladen als gewünscht, so werden sie wieder um einen entsprechenden Betrag entladen. Zu schwach geladene Zellen 12 werden dagegen weiter aufgeladen, bis sie den gewünschten Ladezustand erreichen. Idealerweise wird die in den zu stark geladenen elektrochemischen Zellen 12 gespeicherte elektrische Energie dazu genutzt, die zu schwach geladenen elektrochemischen Zellen 12 weiter zu laden. Dieser Vorgang kann durch die Überwachungs- und Steuereinheiten 14 kontrolliert werden. Ein solches Balancieren der elektrochemischen Zeiten 12 erhöht jedoch nachteiligerweise die Gesamtladedauer der Batterie 10. Gleichzeitig kann es dazu kommen, dass einzelne Zellen 12 so stark überladen werden, dass sie beschädigt werden.

Es ist daher wünschenswert und sinnvoll, das Balancieren der elektrochemischen Zellen 12 direkt mit dem Ladevorgang zu verbinden. Hierzu wird beim erstmaligen Laden 10 für jede elektrochemische Zelle 12 ein vorgegebener Ladestrom und eine vorgegebene Ladezeit eingestellt. Diese Ströme und Zeiten sind dabei für alle elektrochemischen Zellen 12 identisch. Nach dem Laden werden wie üblich die Ladezustände der einzelnen Zellen 12 durch die Überwachungs- und Steuereinheiten 14 gemessen und eine Balancierung durchgeführt. Die einzelnen Ladezustände werden von den Überwachungs- und Steuereinheiten an die Batteriesteuerung 16 übermittelt und dort gespeichert. Bei späteren Ladevorgängen werden nun die Ladeströme und Ladezeiten für die einzelnen elektrochemischen Zellen 12 aufgrund der ermittelten Ladezustände nach dem erstmaligen Laden angepasst. Elektrochemische Zellen 12, die beim erstmaligen Laden zu stark geladen wurden, werden bei folgenden Ladevorgängen schwächer aufgeladen, indem entweder der Ladestrom reduziert wird und/oder die Ladezeit verringert wird. Elektrochemische Zellen 12, die beim erstmaligen Laden zu schwach geladen wurden, werden dagegen bei späteren Ladevorgängen stärker geladen, indem der Ladestrom erhöht wird oder die Ladezeit vergrößert wird. Durch diese Anpassung der Ladeströme und Ladezeiten kann ein separates Balancieren entfallen.

Da die elektrochemischen Zellen 12 mit zunehmendem Alter Veränderungen ihrer physikalischen Eigenschaften zeigen, ist es sinnvoll, regelmäßig eine Überprüfung durchzuführen, ob die verwendeten Ladezeiten und Ladeströme für die elektrochemischen Zellen 12 noch zum gewünschten Ergebnis führen. Dies kann nach jedem einzelnen Ladevorgang durchgeführt werden. Wie nach dem erstmaligen Ladevorgang werden dabei durch die Überwachungs- und Steuereinheiten 14 die Ladezustände der jeweils zugeordneten elektrochemischen Zellen 12 bestimmt, Abweichungen von einem Soll-Ladezustand ermittelt und and die Batteriesteuerung 16 übertragen und schließlich eine Balancierung durchgeführt, falls die Abweichungen zu groß sind. Durch die Batteriesteuerung 16 werden nun neue korrigierte Ladezeiten und Ladeströme für alle elektrochemischen Zellen 12 aufgrund der gemessenen Abweichungen vom Soll-Ladezustand bestimmt. Das Ausmaß der Verringerung oder Vergrößerung der Ladezeiten und Ladeströme kann dabei vom Ausmaß der Differenz zwischen den Ladezuständen der elektrochemischen Zellen 12 und ihrem Soll-Ladezustand abhängig gemacht werden. Im einfachsten Fall liegt dabei eine direkte Proportionalität zwischen dem Betrag der Korrektur von Ladestrom und Ladezeit und der Abweichung des Ladezustands vom Soll-ladezustand vor. Auf diese Art kann der Ladestrom und die Ladezeit für jede einzelne elektrochemische Zelle 12 der Batterie 10 iterativ optimiert werden, so dass die Batteriesteuerung 16 lernt, die einzelnen elektrochemischen Zellen 12 jeweils optimal zu laden, wodurch die Notwendigkeit von Balancierungsphasen vollständig entfällt und ein Überladen einzelner Zellen vermieden wird.

## Patentansprüche

1. Verfahren zum Laden einer Batterie (10) eines Kraftwagens, welche eine Mehrzahl elektrochemischer Zellen (12) umfasst, wobei:
- beim erstmaligen Laden der Batterie (10) alle elektrochemischen Zellen (12) mit einem vorgegebenen Ladestrom für eine vorgegebene Ladezeit geladen werden,
- nach dem erstmaligen Laden ein Ladezustand jeder elektrochemischen Zelle (12) bestimmt wird, wobei für jede Zelle eine Abweichung von einem Soll-Ladezustand gespeichert wird, und die Zellen (12) anschließend balanciert werden;
- bei späteren Ladevorgängen für jede elektrochemische Zelle (12) ein Ladestrom und/oder eine Ladezeit für zukünftige Ladevorgänge in Abhängigkeit von der gespeicherten Abweichung vom Soll-Ladezustand nach dem erstmaligen Laden festgelegt wird.

2. Verfahren nach Anspruch 1,
**dadurch gekennzeichnet, dass**
auch nach späteren Ladevorgängen der Ladezustand jeder elektrochemischen Zelle (12) bestimmt wird, wobei für jede Zelle (12) eine Abweichung von einem Soll-Ladezustand gespeichert wird und die Zellen anschließend balanciert werden.

3. Verfahren nach Anspruch 2,
**dadurch gekennzeichnet, dass**
für jede Zelle (12) der Ladestrom und/oder die Ladezeit für zukünftige Ladevorgänge in Abhängigkeit von der gespeicherten Abweichung vom Soll-Ladezustand nach dem jeweils letzten Laden festgelegt wird.

4. Verfahren nach einem der Ansprüche 1 bis 3,
**dadurch gekennzeichnet, dass**
der Ladestrom und/oder die Ladezeit für eine elektrochemische Zelle (12), deren Ladezustand nach einem Ladevorgang den Soll-Ladezustand überschreitet, um einen vorgegebenen Wert verringert wird.

5. Verfahren nach einem der Ansprüche 1 bis 4,
**dadurch gekennzeichnet, dass**
der Ladestrom und/oder die Ladezeit für eine elektrochemische Zelle (12) deren Ladezustand nach einem Ladevorgang den Soll-Ladezustand unterschreitet, um einen vorgegebenen Wert erhöht wird.

6. Verfahren nach einem der Ansprüche 4 oder 5,
**dadurch gekennzeichnet, dass**
der vorgegebene Wert zum Erhöhen bzw. Verringern des Ladestroms und/oder der Ladezeit in Abhängigkeit eines Ausmaßes der Abweichung des Ladezustands der jeweiligen Zelle von dem Soll-Ladezustand gewählt wird.

7. Verfahren nach Anspruch 6,
**dadurch gekennzeichnet, dass**
der vorgegebene Wert proportional zum Ausmaß der Abweichung vom Soll-Ladezustand gewählt wird.

## Claims

1. Method for charging a battery (10) of a motor vehicle, said battery comprising a plurality of electrochemical cells (12), wherein:
- all electrochemical cells (12) are charged with a predefined charge current for a predefined charge time when charging the battery (10) for a first time;
- a charge state of each of the electrochemical cells (12) is determined after charging for the first time, wherein for each cell a deviation from a target charge state is stored and the cells (12) are subsequently balanced;
- in later charging processes, a charge current and/or charge time for future charging processes is established for each of the electrochemical cells (12) on the basis of the stored deviation from the target charge state after charging for the first time.

2. Method according to claim 1, **characterised in that** the charge state of each of the electrochemical cells (12) is also determined after later charging processes, a deviation from a target charge state being stored for each cell (12), and the electrochemical cells being subsequently balanced.

3. Method according to claim 2, **characterised in that** the charge current and/or the charge time for future charging processes is established for each cell (12) respectively on the basis of the stored deviation from the target charge state after the most recent charge.

4. Method according to any of claims 1 to 3, **characterised in that** the charge current and/or the charge time for an electrochemical cell (12), the charge state of which exceeds the target charge state after a charging process, is reduced by a predefined value.

5. Method according to any of claims 1 to 4, **characterised in that** the charge current and/or the charge time for an electrochemical cell (12), the charge state of which falls below the target charge state after a charging process, is increased by a predefined value.

6. Method according to either claim 4 or claim 5, **characterised in that** the predefined value for increasing or reducing the charge current and/or charge time is selected on the basis of the extent of the deviation of the charge state of the respective cell from the target charge state.

7. Method according to claim 6, **characterised in that** the predefined value is selected proportionally to the extent of the deviation from the target charge state.

## Revendications

1. Procédé servant à charger une batterie (10) d'un véhicule à moteur, laquelle comprend une multitude de cellules (12) électrochimiques, où :
- lors de la toute première charge de la batterie (10), toutes les cellules (12) électrochimiques sont chargées, pour un temps de charge prédéfini, avec un courant de charge prédéfini,
- après la toute première charge, un état de charge de chaque cellule (12) électrochimique est déterminé, où un écart par rapport à un état de charge théorique est enregistré pour chaque cellule, et les cellules (12) sont immédiatement après équilibrées,
- lors d'opérations de charge ultérieures, un courant de charge et/ou un temps de charge nécessaires aux opérations de charge à venir sont fixés, pour chaque cellule (12) électrochimique, en fonction de l'écart enregistré par rapport à l'état de charge théorique après la toute première charge.

2. Procédé selon la revendication 1,
**caractérisé en ce**
**que** l'état de charge de chaque cellule (12) électrochimique est déterminé également après des opérations de charge ultérieures, où un écart par rapport à un état de charge théorique est enregistré pour chaque cellule (12) et les cellules sont immédiatement après équilibrées.

3. Procédé selon la revendication 2,
**caractérisé en ce**
**que** le courant de charge et/ou le temps de charge nécessaires aux opérations de charge à venir sont fixés, pour chaque cellule (12), en fonction de l'écart enregistré par rapport à l'état de charge théorique après la respectivement dernière charge.

4. Procédé selon l'une quelconque des revendications 1 à 3,
**caractérisé en ce**
**que** le courant de charge et/ou le temps de charge nécessaires à une cellule (12) électrochimique, dont l'état de charge dépasse, après une opération de charge, l'état de charge théorique, sont diminués d'une valeur prédéfinie.

5. Procédé selon l'une quelconque des revendications 1 à 4,
**caractérisé en ce**
**que** le courant de charge et/ou le temps de charge nécessaires à une cellule (12) électrochimique, dont l'état de charge est inférieur, après une opération de charge, à l'état de charge théorique, sont augmentés d'une valeur prédéfinie.

6. Procédé selon l'une quelconque des revendications 4 ou 5,
**caractérisé en ce**
**que** la valeur prédéfinie est choisie afin d'augmenter ou de diminuer le courant de charge et/ou le temps de charge en fonction d'une importance de l'écart présenté par l'état de charge de la cellule respective par rapport à l'état de charge théorique.

7. Procédé selon la revendication 6,
**caractérisé en ce**
**que** la valeur prédéfinie est choisie de manière proportionnelle à l'importance de l'écart par rapport à l'état de charge théorique.
